# EUROPEAN PATENT APPLICATION

(11) **EP 1 416 398 A1**
(43) Date of publication of application: **06.05.2004**
(21) Application number: 02405934.7
(22) Date of filing: 01.11.2002
(51) Int. Cl.: G06F 17/30, G06F 9/44

(54) **Method and system for selecting objects in a software system**

(71) Applicant: ABB RESEARCH LTD., 8050 Zürich (CH)
(72) Inventor: Naedele, Martin, 8050 Zürich (CH); Vetter, Claus, 5405 Baden-Dättwil (CH); Werner, Thomas, 5404 Baden (CH); Preiss, Otto, 5079 Zeihen (CH)
(74) Representative: ABB Patent Attorneys

(57) **Abstract**

The invention is directed to a method for selecting objects in a software system, like an aspect object system, comprising a plurality of objects each comprising at least one property, said at least one property having a value. It comprises the following steps: -querying objects (23, 24) in a software system for their values of at least one of the properties of said objects; -graphically presenting (26, 27, 28) to a user on an output device (1) the objects based on values of the properties of the queried objects and on at least one preset ordering rule (26); upon selection (29, 31) of a particular object of interest from the graphical presentation (10);-presenting information (32, 33) from the selected object of interest at the output device (1). The invention is also directed to a system for performing the method.

## Description

### Technical field of the invention

The present invention relates to a method for selecting objects in a software system and to a system implementing the method.

### State of the art

The present invention is concerned with computerised systems relating to real world objects and/or to systems using software objects. An example for a computerised system in the meaning of the present invention is a computerised system for control which may be used for controlling a number of single devices, an object in a process, a complete equipment in any location including plants, homes, or other facilities, as well as a process or an industrial installation such as a steel mill, a paper mill, or an automated factory. Particularly, the invention helps in integrating many and varied types of information within a computerised system.

An example for a system using software objects is a programming environment for object oriented programming. Such a system is used for programming programs which are made up of software objects. Such software objects may contain information concerning the run time behaviour and history (debugging information), and this information may be inspected and/changed via an object browser or an object inspector.

Two general themes in the operation of complex systems such as industrial plants as well as management systems are information availability and information integration. I.e., information must be available at the right place and at the right time, independent of where the information comes from. This results in several requirements. First, it must be possible to seamlessly integrate information from a variety of existing sources. Secondly, it must be possible to integrate new sources of information, such as applications with a certain functionality, in a straightforward way, without having to undergo lengthy and difficult efforts of updating and modifying the existing system to include these new applications.

Particularly in plant operations as well as asset lifecycle management, there is a central problem in keeping together, managing, and accessing information about a large number of plant and process entities. These entities or real world objects, are of many different kinds. They can be physical process objects, like a valve, or more complex, like a reactor. Other examples are products, material, batches, manufacturing orders, customer accounts, etc.

An example of such a system for information and control integration is the ABB Aspect Integrator Platform (AIP). The AIP is an information integration platform based on the notion of objects as access points to information retrieval. Associated with each object (aspect object) are different kinds of information (aspects) and information processing programming code (aspect implementations) associated with these aspects to provide information or execute behaviour. Each aspect object is of a certain object type and part of this type definition is a set of aspects associated with the aspect object and in consequence, the set of aspect implementations required for implementing these aspects.

Throughout the specification of this invention, the following definitions shall apply to the terms used in connection with the description of the systems.

Real world object: any entity having either a physical shape or a logical entity and exhibiting at least one behaviour, with which a representation/control system should interact. Examples may be (in particular in the context of plant management) machines, engines, pipelines, valves, computers, computer programs, customer accounts, manufacturing orders, etc.

Software object (object): a programming construct as well known in the field of object oriented programming.

Aspect: a facet of a real world object; a logical/systematic point of view of looking at a real world object. In other words, an aspect is a mathematical subset of all the information and behaviour associated with a real world object. The term is used in a bipartite manner. One portion of an aspect is the concept as such for the real world object; while the other portion concerns how the aspect is represented within aspect objects.

Aspect object: similar to a software object, this is a construct comprising at least one aspect for a real world object. It is a representation for real world objects, the aspects of which are "contained" in the aspect object. Software wise, an aspect object is a container of references to aspect implementations. In contrast to a classical software object, it does not directly contain data and methods, but rather partitions those into its aspects. It may be implemented using e.g. object-oriented technologies, or component technology like COM or .NET.

Aspects, aspect objects and other objects may all have "properties". Properties are, in the meaning of the present invention, items representing a state of the object or aspect. A property has a "value", which is a data or data set characterising the property. There is almost no limit to the scope of these terms. Properties may be simple constants or variable having numerical values, but may as well be more complex, like document tags.

Aspect implementation: a programming construct implementing a certain aspect or a group of aspects. It may either be a specially written code, or may be a pre-existing program, which is "wrapped" by a so called aspect system object, in order to make it accessible to the system. An aspect implementation may e.g. a program for determining and/or setting the status of a valve, a web browser displaying operating manuals for a machine, a mail client able to order spare parts for a machine, or a program for logging maintenance work on a machine. An aspect implementation may also be an object/group of objects in a program, or a component, like a COM component. An aspect implementation may deliver, when invoked, the value(s) of one or more properties of an aspect.

Aspect object structure: an organisation (preferably a hierarchical tree organisation) of aspect objects providing a description of the dependencies between real world objects. An aspect object can exist in multiple structures. Examples for structures are functional and location structures.

Software system: A collection of all aspect objects and their aspects, structures, and aspect implementations including an aspect framework, for implementing a real world system consisting of a plurality of real world objects.

In order to avoid ever and ever again re-implementing the same object types all over ABB, especially for common aspect objects like "company", "location", "person", "order", "device", "valve" etc., an ABB wide aspect object type library is desirable. For this global type library, each object type will be designed with regard to reusability in as many different contexts as possible, i.e. with any many aspects and aspect implementations as necessary for these contexts.

Aspect objects may be grouped and linked together in aspect object structures all having a related context, like location structure or functional structure. At least one of these software systems for control, namely the AIP (aspect integrator platform) from ABB allows for the aspect objects to be contained in more than one aspect object structure.

The navigation user interface used for displaying the aspect object structure or the object structure of an object-oriented program and navigating through this structure is for the purposes of the present invention called a structure browser. An example for such a structure browser is ABB's "Plant Explorer". A structure browser may typically consist, as an output device, of a navigation window showing a tree structure for navigation, representing the aspect object structure currently displayed, another window showing different aspects available for the node (aspect object, or compositions of several aspect objects etc.) selected in the navigation window, and a further window with the user interface of an aspect implementation with which the user accesses information associated with the selected aspect. Via a list box, one of the several available aspect object structures may be selected for navigation. It might also be possible to devise structure browser with multiple windows, each displaying a different (or the same, at a different node) aspect object structure.

Additionally, there may typically be provided search aids for facilitating navigation, such as filters and search/query expressions. A problem with such queries resides in the fact that in general they return a set of objects for which the query string evaluated to true, but they do not allow for a "fuzzy" differentiation on how true the evaluation was, or (in numerical queries) what objects would match a range of values.

It is therefore an object of the present invention to provide a system where fuzzy results and non binary relationships may be queried and the results presented in a graphical way for further use of the respective software objects.

### Description of the invention

This object is solved by the Method for selecting objects according to independent claim 1, as well as a system for selecting objects according to independent claim 11. Further advantages, features and details of the invention will become more readily apparent from the dependent claims, the description, and the appended drawings.

Hence, the invention is directed to a method for selecting objects in a software system comprising a plurality of objects each comprising at least one property, said at least one property having a value, comprising the following steps:
- querying objects in a software system for their values of at least one of the properties of said objects;
- graphically presenting to a user on an output device the objects based on values of the properties of the queried objects and on at least one preset ordering rule;
upon selection of a particular object of interest from the graphical presentation:
- presenting information from the selected object of interest at the output device.

The terms object, property and value are as defined above. The term graphically representing denotes an action of making the information to be presented visible on an output medium, in a graphical (non-textual) manner.

The output device may be any output device known in the art, like a screen in a terminal, a window of a graphical user interface, or even a printout, provided that there is a means for communicating the selection of the user to the system running the inventive method.

The graphical representation is also based on an ordering rule, which is applied, i.e., the positioning of the object representations (dots or other marks) will be performed according to the result of an ordering process, the objects are subjected to. Since more than one property of the objects may be queried, more than one ordering rule may be applied, one for every dimension of the graphical representation used. It is also possible to apply more than one ordering rule for a single property of the objects. The ordering might then be done in a hierarchically structured manner.

As can be recognised from the above, the query of the present invention differs from the prior art search strategies of object systems in that not only those objects are returned as search results, which match the search expression, but that objects are returned which have a certain property, irrespective of a particular value for that property. Hence, the search result will be much broader, comprising a larger number of objects. However, by applying an ordering rule, and graphically presenting the results of the query, i.e. the found objects graphically ordered according to the ordering rule, the result of the query can nevertheless easily be analysed by a user of the system, who may then be able to decide, which of the presented objects will be of particular interest to him, and select the object accordingly.

The graphical representation of the objects comprises at least two facets: A presentation of the objects (like dots, crosses, the objects' names or the like), and a representation of the values of the queried properties for these objects (like spatial distribution of the object dots, a table with the values aligned with the objects etc.). Through this presentation, the user can visually determine which objects have what values for the queried properties.

Of course, the query used for the present invention may comprise elements of traditional search strategies we well. E.g., a query may be limited to certain objects by defining an object class within the query, or by extending the query with additional conditions on further properties ("Get the values of property A of all objects which also have property B equal some value"). The query may furthermore, in particular embodiments, contain further information on the representation. E.g., if the user desires to have one property represented in a first dimension, and a second property in the second dimension, this may be specified in the set-up of the query.

An important and particularly preferred field of application for the present invention is in the field of aspect systems for control systems, like control systems for complex plants. Here, a huge number of aspect objects representing real world objects, and having certain properties, often need scrutinising.

Thus, the invention may be characterised in that the objects are aspect objects comprising at least one aspect, wherein the aspect comprises at least one property representing a property of a real world object.

Furthermore, the software system may comprise a plurality of aspect object structures each comprising a plurality of aspect objects. This is a common feature to aspect systems, and is also implemented in e.g. the ABB aspect platform. Such structures allow for a finer analysis of the overall system. The structures may well contain the same objects, albeit ordered differently, or may contain overlapping objects. Generally, the system browser has provisions for selecting one of the aspect object structures. The query according to the invention may be limited to the selected structure. In another embodiment of the invention however, it will also be possible to extend the query to more than one structure, or to integrate the structure(s) to be used into the formulation of the query.

More than one property may be queried at once. Hence, at least two different properties may be queried; at least two dimensions may be used for graphically presenting the objects on said output device, and each property may be represented by a different dimension of the graphic presentation. It is also possible to display more than one property in one dimension, e.g. by subgrouping objects according to a first property, and then presenting them within the subgroups ordered according to a second property.

The query can be done on the entire set of objects present in a software system; it is however also possible that the query is performed on a subset of all objects of the object system. Such query may be done on a single structure, or on objects defined by other properties besides those properties, which are to be presented graphically.

The objects may be aspect objects comprising at least one aspect, wherein the aspect comprises at least one property representing a property of a real world object, the query being performed on particular aspects of the queried objects.

In a preferred embodiment of the present invention, the presentation of the queried objects in the output device is effected by a scatter plot, a schematics, or a graph. However, also other ways of presenting the objects are possible, like "radar" diagrams, in which an object is presented by several vectors aiming in predetermined directions from a common origin, and each vector represents one property.

Furthermore, to improve the usability of the system, the presentation of the queried objects may also include textual information on the values and/or properties of the queried objects. The graphical presentation may for example be circumferenced by scales plotting values for the properties, and the object representations (dots etc.) may be accompanied by designators identifying the objects.

Several different ordering rules, which may furthermore contain finetuning algorithms, may be used for the present invention. The preset ordering rules may e.g. be for arranging the objects in alphabetical, numerical, spacial, and enumerational order of the properties' values. An enumeration is to be understood as comprising a list of predetermined values in a particular order, according to which the existing values of the queried objects are ordered and grouped. a spacial ordering may be achieved by spatial information provided as properties, and arranging the object representations as an image of the spatial relations derivable from the spatial information. Further approaches and ordering algorithms (rules) may be used and are known to the person skilled in the field of ordering mathematics.

After having selected a particular object, this object will be displayed on the output device. Preferably, presenting of the information of the selected object comprises:
- presenting a list of the properties and/or aspects of the object; and
   upon selection of a particular property or aspect by a user,
- taking an action associated with the selected property or aspect.

The associated action to be taken depends very much on the kind of object to be examined, the kind of aspect etc. A wide variety of actions is comprised in the present invention. E.g., if the system is a programming environment for object oriented programming, an action may be presenting a value for a constant, if the queried property is such a constant. It may also be invoking a routine within the queried object, which returns the total runtime of the object, or the amount of memory used by the object's variables. By this, it will be possible to use the present invention as debugging tool for programming purposes. If the system is an aspect oriented control system for a plant, the action may be invoking an aspect implementation for that aspect, and displaying its output on the output device. Such methods are known from e.g. ABB's plant explorer.

The invention is also directed to a system, particularly for effecting the inventive method. All that was said in respect to the inventive system does also apply to the inventive method, and vice versa. Therefore, mutual reference is made.

This inventive system for selecting objects in a software system comprises a plurality of objects each comprising at least one property having a value, said system comprising search means for querying objects in a software system for their values of at least one of the properties of said objects
ordering means for ordering the queried objects by at least one preset ordering rule, based on values of the properties of the queried objects;
an output device for graphically presenting the ordered, queried objects to a user, and upon selection of an object of interest in the graphical presentation, for presenting information from said object of interest; and
at least one input device for entering a query for objects and for selecting said object of interest from the graphical presentation.

The means used in the inventive system may be specific pieces of hardware constructed for their respective intended use; they may however also be software components within an integrated system like a program dedicated to performing the functions of the means, and the inventive method.

The inventive system will be particularly useful in distributed computing environments, in which several devices and/or data processing units with network interfaces and the ability to provide information on properties, are interconnected through a network topology. In such a network, information retrieval is significantly simplified by the present invention, if appropriate means of communication and object (or object property value) delivery are implemented. In a network, additional level of communications protocols might need to be implemented to effectively transfer the required information of the objects and the queries to and fro among the components.

The system may furthermore be characterised in further comprising a selection means for assigning a selection input of the user to the right object to be selected, and for selecting this object. This mechanism, generally embodied in software functions, will allow to automatically correlate an input of the user with the object intended for selection. In a graphical user interface, this means inter alia identifying the position of a mouse click, based on a coordinate system for the output area/output device, identifying which object is closest to (and within a predefined range) the position of the clicking, and selecting this object. Further actions will be to derive further information on the object, and display this information on another or the same output device.

The output device may also comprise algorithm means for outputting visual representations corresponding to the queried, ordered objects. This feature allows for the correct graphical presentation in a plot etc. by positioning a visual representation of the object at a position which corresponds in its plot dimension with the value of the property, and for the additional presentation of add-on information concerning the presented objects, on the output device.

### Short Description of the Drawings

In the following, the invention will be further detailed using specific embodiments, while referring to the drawing, in which
Fig. 1 is a flow diagram of an embodiment of the inventive method;
Fig. 2 is a window of a navigator program for object systems according to the prior art; and
Fig. 3 is a window of a navigator program for object systems according to an embodiment of the present invention.

### Ways to practising the invention

The present invention proposes a new user interface paradigm and associated software architecture and methods which allow visualising and selecting objects involved in non-binary relationships. In other words, for many navigational purposes a hierarchical, tree-based navigation (and hence, representation) is not a natural choice, because it implies a "sub" or "contained in" relation. This is especially true with concepts which are of an abstract, non-object nature.

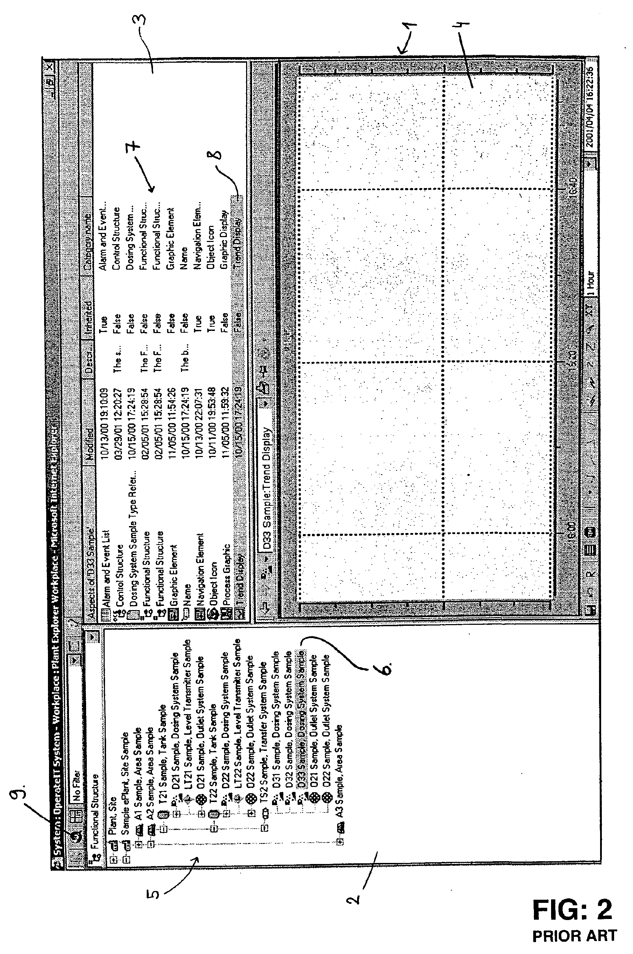

A known navigation approach is shown in Fig. 2, exemplified by the plant navigator of the AIP. Shown is a window 1 used as output device for the plant explorer. The left column 2 shows a structure of all the objects 5 used in the system. A user may select one of these objects 6 for a more detailed inspection (e.g. by clicking on an object definition with a "mouse" input device). On the right side of the window, the upper subwindow 3 displays a list of all the aspects 7 (properties etc.) of the selected object 6. A user may select a particular aspect 8 of the object, which is of interest to him or her, e.g. the "Trend Display" aspect. In the lower subwindow 4, the selected aspect will then be displayed. In the given example, a program (the aspect implementation) will be invoked which uses the subwindow 4 for displaying information this program has generated (measured/obtained/stored etc.). Close to the upper left corner of window 1, a small icon 9 showing a magnifying glass is displayed. Clicking on this icon 9 will launch a search utility, which allows formulating a search expression. After activating this search, the left column subwindow 2 will be limited to displaying those objects 5 matching the search expression, in their usual tree like structure.

To support non-tree based navigation, the present invention provides means and a method which allows replacing (or augmenting) the tree navigator part of e.g. the AIP plant explorer with a graphical explorer based on e.g. a 2D (or 3D) scatter plot representing all elements (objects) in the overall system, or of a subset defined by certain criteria, e.g. a query.

To be able to deliver the functionality required for the present invention, the following elements of a software architecture may either be required or optionally be added to the architecture. The sequence of these elements follows their normal usage sequence. The following is based on the assumption that the invention will be used on an aspect object system. It goes without saying however that the invention will be usable for arbitrary objects systems, with the appropriate modifications.
- A user interface to the system (form sheet or a query language, depending on how graphical the user interaction should be), located in an output device, like a window on a computer screen, for describing the objects, aspects, and specific aspect properties the user is interested in.
- A set of rules, particularly for ordering non-numerical information. Such rules may determine a spatial ordering, alphabetic ordering, an ordering according to particular specifications (like colour, sound etc.), or simply an ordering according to a list of preset values (similar e.g. to lists used for defining variables in certain programming languages).
- An output area, like a plot area etc, either on the user interface, or in a separate device.
- An algorithm to plot points (dots, crosses etc.) in the output area corresponding to objects and their actual values in the aspect properties for the aspects defined in the query.
- Means to select locations on the output area, e.g. by using a pointing device.
- An algorithm to correlate the selected location on the output area and a (the nearest) plotted point.
- A connection between the selected plotted point and the underlying object (e.g. clickable images can be used as underlying technology).
- An update mechanism to show the aspects of the selected object in the aspect display window.

It goes without saying that the invention can easily be extended to use more than two dimensions, e.g. a three-dimensional plot by using suitable 3D plotting and input location transformations, with stereoscopic displays/glasses and 3d-pointing devices. The invention can furthermore be extended to not just involve the typical scatter plots, but also drawings, such as schematics, graphs etc.

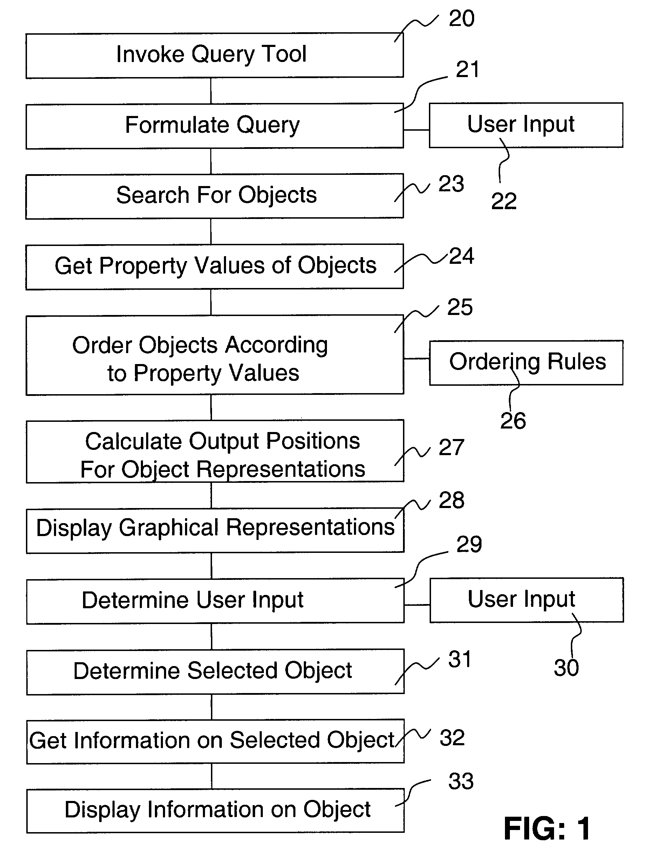

Fig. 1 shows a flow diagram illustrating the method steps of an embodiment of the present invention. In step 20, a Query tool is started for entering and/or configuring a query. This will be done upon user's disposal. In 21, a query is formulated with the user's input 22, containing information on the properties to be queried from the objects within a system and optionally groups of objects to be queried, and conditions on certain other properties to be fulfilled. First, in 23, the system is searched for all objects qualifying for the intended query, based on belonging to a selected group, meeting further conditions, and actually having the properties which are to be queried. All qualified objects which are found in the system by this search, will now be further asked in 24 for the values of the queried properties, which will be send back to the device running the inventive method. Next, in 25 the objects will be ordered according to the values retrieved from the qualified objects, and according to additional ordering rules 26, if need be (e.g. a simple numerical ordering may be done without an ordering rule). Based on the ordering of the objects (which will already result in some kind of "virtual coordinates"), in 27 the output positions (e.g. coordinates) of the object representations are calculated for the graphical presentation, which is then effected in step 28 on an output device like a window of a GUI or a screen.

Next, in 29, a user input (who intends to select a particular object) is determined based on the user input action 30. This will generally include some kind of coordinate determination for the user action. Based on the user input, a selected object is now determined in 31, based on the match of object coordinates and coordinates of the user input. Now, further information is retrieved from the selected object, by sending a retrieval request. In a plant control system, this object may e.g. be an aspect object containing a plurality of aspects. The information retrieved from such an object may hence be a list of all its aspects, including identifiers etc. The retrieved information will finally be displayed in 33, for further inspection and selection of certain bits of this information, by a user.

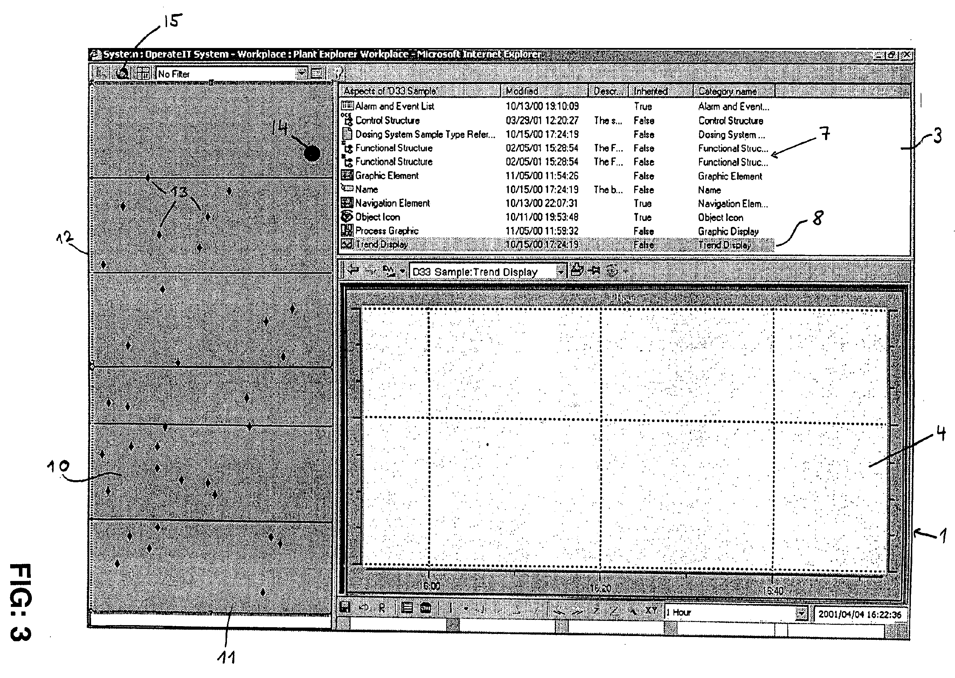

In the following, an example will be given with reference to Fig. 3.

The objects in the system according to the exemplary embodiment represent the elements of a manufacturing plant, which are situated in the plant information system (process control system) conventionally accessible via multiple navigation structures, such as a location structure, a control structure, or a functional structure.

Lets assume that the user of the plant information system wants to obtain information about the reliability of the devices in the system. For that purpose, he or she formulates a query to take all objects that are of the type "manufacturing device" and have them plotted using the productive hours in the preceding month and the breakdown hours in the preceding month as axes. The inventive system plots those objects according to their values, as outlined in Fig. 3. She or he can then directly use this plot as a means of navigation interface, to obtain more detailed information on devices he is interested in, e.g. those with "comparatively high" breakdown hours and at the same time "comparatively low" productive hours.

As shown in Fig. 3, the left column of Fig. 2 is according to the invention used (alternatively or additionally) as a plot output area 10. The results of a query are presented on this output area 10 as dots 13, scattered in two dimensions 11 and 12, each of the dimensions representing a different property of the objects, e.g. productive hours and breakdown hours, respectively. The ordering rule applied in this example was for both dimensions "order in numerically increasing values". One of the dots has been highlighted as a selected object 14. In subwindow 3 on the right side of output window 1, a list of all aspects (or all available aspects/all filtered aspects) for the selected object 14 is presented, from which the user may select a particular aspect 8, as in Fig. 2. Also as in Fig. 1, an output area 4 is provided, where information related to the aspect, e.g. by an aspect implementation, is output.

An icon 15, which is situated at the same position of window 1 as in Fig. 2, has the function of invoking a query generator, which is used to enter and/or configure the query to be made according to the invention. When clicked, a window is opened allowing the user to enter and start the desired query.

Usability of search and analysis tools is of importance to their acceptance by users in the fields of software development and system controlling alike. The present invention covers one such usability feature, which is focused on an important sales argument for control systems like ABB's AIP: easy, goal oriented navigation through the plant information.

### List of reference numerals

- 1: Main window
- 2: Left column
- 3: subwindow
- 4: subwindow for displaying information
- 5: object representations
- 6: selected object
- 7: properties (aspects) of an object
- 8: selected property
- 9: search tool icon
- 10: plot output area
- 11: first dimension of plot
- 12: second dimension of plot
- 13: dots representing object
- 14: dot representing selected object
- 15: query generator icon
- 20: Invoke Query Tool step
- 21: Formulate Query step
- 22: User Input
- 23: Search For Objects step
- 24: Get Property Values of Objects step
- 25: Order Objects According to Property Values step
- 26: Ordering rules
- 27: Calculate Output Positions For Object Representations step
- 28: Display Graphical Representations step
- 29: Determine User Input step
- 30: User Input
- 31: Determine Selected Object step
- 32: Get Information on Selected Object step
- 33: Display Information on Object step

## Claims

1. A method for selecting objects in a software system comprising a plurality of objects each comprising at least one property, said at least one property having a value, comprising the following steps:
- querying objects (23, 24) in a software system for their values of at least one of the properties of said objects;
- graphically presenting (26, 27, 28) to a user on an output device (1) the objects based on values of the properties of the queried objects and on at least one preset ordering rule (26);
upon selection (29, 31) of a particular object of interest from the graphical presentation (10);
- presenting information (32, 33) from the selected object of interest at the output device (1).

2. Method according to claim 1, **characterised in that** the objects are aspect objects comprising at least one aspect, wherein the aspect comprises at least one property representing a property of a real world object.

3. Method according to claim 2, **characterised in that** the software system comprises a plurality of aspect object structures each comprising a plurality of aspect objects.

4. Method according to any of claims 1 to 3, **characterised in that** at least two different properties are queried; at least two dimensions (11, 12) are used for graphically presenting the objects on said output device, and each property is represented by a different dimension of the graphic presentation.

5. Method according to any of claims 1 to 4, **characterised in that** the query is performed on a subset of all objects of the object system.

6. Method according to any of claims 1 to 5, **characterised in that** the objects are aspect objects comprising at least one aspect, wherein the aspect comprises at least one property representing a property of a real world object, the query being performed on particular aspects of the queried objects.

7. Method according to any of claims 1 to 6, **characterised in that** the presentation of the queried objects in the output device (10) is effected by a scatter plot, a schematics, or a graph.

8. Method according to any of claims 1 to 7, **characterised in that** the presentation (13, 14) of the queried objects also includes textual information on the values and/or properties of the queried objects.

9. Method according to any of claims 1 to 8, **characterised in that** the preset ordering rules are for arranging the objects in alphabetical, numerical, spacial, and/or enumerational order of the properties' values.

10. Method according to any of claims 1 to 9, **characterised in that** the presenting of the information of the selected object comprises:
- presenting a list (7) of the properties and/or aspects of the selected object; and
upon selection of a particular property or aspect by a user,
- taking an action associated with the selected property or aspect.

11. System for selecting objects in a software system comprising a plurality of objects each comprising at least one property having a value, said system comprising
search means for querying objects in a software system for their values of at least one of the properties of said objects;
means for ordering the queried objects by at least one preset ordering rule, based on values of the properties of the queried objects;
an output device (1) for graphically presenting the ordered, queried objects to a user, and upon selection (29) of an object of interest in the graphical presentation (10), for presenting (32, 33) information from said object of interest; and
at least one input device for entering a query for objects and for selecting said object of interest from the graphical presentation.

12. System according to claim 11, **characterised in** further comprising a selection means for assigning a selection input of the user to the right object to be selected, and for selecting this object.

13. System according to claim 11 or 12, **characterised in that** the output device comprises algorithm means for outputting visual representations corresponding to the queried, ordered objects.

14. System according to any of claims 11 to 13, **characterised in that** said system is a computer program product, the components of which may be loaded at least in part into the main memory of a digital data processing device, and be executed on said digital data processing device.
